# FASCICULE DE BREVET EUROPEEN

(11) **EP 3 512 153 B1**
(45) Date de publication et mention de la délivrance du brevet: **05.05.2021**
(21) Numéro de dépôt: 19150830.8
(22) Date de dépôt: 08.01.2019
(51) Int. Cl.: H04L 9/00

(54) **FONCTION CRYPTOGRAPHIQUE ET AUTHENTIFICATION DE COMPOSANT REMPLAÇABLE POUR IMPRIMANTE**
KRYPTOGRAPHISCHE FUNKTION UND AUTHENTIFIZIERUNG EINER AUSTAUSCHBAREN KOMPONENTE EINES DRUCKERS
CRYPTOGRAPHIC FUNCTION AND AUTHENTICATION OF REPLACEABLE COMPONENT FOR PRINTER

(30) Priorité: 16.01.2018 FR 1850331
(43) Date de publication de la demande: 17.07.2019
(73) Titulaire: PROTON WORLD INTERNATIONAL N.V., 1831 Diegem (BE)
(72) Inventeur: DAEMEN, Joan, 6581 WV MALDEN (NL); PEETERS, Michael, 1320 TOURINNES-LA-GROSSE (BE)
(74) Mandataire: Cabinet Beaumont

(56) Documents cités:
- EP-A1- 1 260 054
- EP-A1- 2 523 385
- US-A1- 2014 055 290
- A.J. Elbirt ET AL: "An instruction-level distributed processor for symmetric-key cryptography", IEEE TRANSACTIONS ON PARALLEL AND DISTRIBUTED SYSTEMS., vol. 16, no. 5, 1 May 2005 (2005-05-01), pages 468-480, XP055561052, US ISSN: 1045-9219, DOI: 10.1109/TPDS.2005.51

## Description

### Domaine

La présente description concerne de façon générale les circuits et systèmes électroniques exécutant des opérations cryptographiques et, plus particulièrement, un procédé et un circuit pour l'authentification d'une cartouche d'imprimante.

### Exposé de l'art antérieur

On connait de nombreuses techniques cryptographiques afin de protéger des informations (données, clés, etc.) contre des accès non autorisés (piratage). Ces techniques peuvent être utilisées à des fins de signature pour garantir l'authenticité ou l'origine d'une information ou d'un produit, à des fins de chiffrement proprement dit afin d'empêcher un pirate de connaitre certaines informations, etc.

Pour tenter de découvrir les quantités protégées (clés ou données), des pirates ou fraudeurs mettent en oeuvre différentes catégories d'attaques. Il peut s'agir d'attaques par analyse de la réponse du circuit (en consommation, en rayonnement, etc.) qui sont dites par canaux cachés. Une autre catégorie d'attaques consiste à introduire une perturbation dans le fonctionnement du circuit et à en analyser les conséquences sur la réponse directe ou indirecte (attaques par injection de fautes).

L'évolution des attaques pousse au développement d'algorithmes cryptographiques de plus en plus résistants afin de protéger les informations ou les produits.

Un algorithme cryptographique met généralement en oeuvre, pour traiter un message, une fonction constituant une permutation non linéaire basée sur plusieurs exécutions d'une même succession d'opérations élémentaires. La succession d'opérations élémentaires est généralement désignée tour ou fonction de tour (« round » ou « round fonction »). La fonction réutilise généralement le résultat du tour précédent comme l'un des opérandes appliqués au tour courant. Le nombre de tours conditionne généralement la résistance de l'algorithme.

La présente description concerne plus particulièrement une fonction cryptographique de permutation, pouvant être utilisée, par exemple, pour du hachage, du chiffrement ou un calcul de signature.

Le document EP2523385 décrit un procédé et un circuit pour opération cryptographique.

Le document US20100055290 décrit des procédés et appareil dans des codeurs et décodeurs sur des corps finis.

Le document EP1260054 décrit un système et protocole de validation.

### Résumé

Un mode de réalisation pallie tout ou partie des inconvénients des fonctions cryptographiques usuelles.

Un mode de réalisation propose une fonction cryptographique capable de protéger un chiffrement ou une signature en particulier contre des attaques par canaux cachés ou par injection de fautes.

Un mode de réalisation propose une fonction cryptographique de permutation permettant de détecter aisément un dysfonctionnement volontaire ou accidentel.

Un mode de réalisation propose une solution d'authentification d'un composant remplaçable pour imprimante, par exemple une cartouche d'encre.

Un mode de réalisation propose un mécanisme d'authentification d'une cartouche d'imprimante par une imprimante.

Un mode de réalisation, prévoit une fonction cryptographique exécutée par un circuit électronique, appliquée à un premier mot, un deuxième mot, un troisième mot et un quatrième mot, tous représentant des codes en base 7, comprenant :
une étape de multiplication, code par code, du troisième mot par le quatrième mot ;
une étape d'addition, code par code, respectivement au premier mot et au deuxième mot, du résultat de la multiplication ;
une étape de soustraction, code par code, du résultat de l'addition au deuxième mot au résultat de l'addition au premier mot ;
une étape d'addition, code par code, du résultat de la soustraction respectivement au troisième mot et au quatrième mot ;
une étape de combinaison, code par code, à une constante de tour, du résultat de l'étape d'addition du troisième mot au résultat de la soustraction ; et
une étape de multiplication par deux, code par code, du résultat de ladite combinaison et de décalage circulaire des codes des résultats respectifs de l'étape d'addition du quatrième mot au résultat de la soustraction, de l'étape d'addition du deuxième mot au résultat de la multiplication, et de l'étape d'addition du premier mot au résultat de la multiplication.

Selon un mode de réalisation, chaque mot comporte trente-deux codes.

Selon un mode de réalisation, les décalages circulaires sont respectivement d'une, de cinq et de quatorze positions.

Selon un mode de réalisation, chaque code en base 7 est représenté sous la forme d'un triplet d'états binaires.

Selon un mode de réalisation, les étapes sont exécutées plusieurs fois, l'état final d'une itération constituant l'état initial d'une itération suivante.

Un mode de réalisation prévoit un procédé de hachage mettant en oeuvre au moins une fonction cryptographique.

Selon un mode de réalisation, un message est converti en base 7 pour être appliqué à ladite fonction.

Selon un mode de réalisation, la fonction est appliquée plusieurs fois.

Un mode de réalisation prévoit un procédé de protection d'une information manipulée par un circuit électronique, mettant en oeuvre le procédé de hachage.

Selon un mode de réalisation, l'apparition d'un triplet de bits déterminé identifie une erreur.

Un mode de réalisation prévoit un produit-programme d'ordinateur comportant des instructions qui, lorsqu'elles sont exécutées par un processeur, font que le processeur met en oeuvre une fonction ou un procédé tel que décrit.

Un mode de réalisation prévoit une mémoire stockant des instructions qui, lorsqu'elles sont mises en oeuvre par un processeur, font que le processeur met en oeuvre une fonction et/ou un procédé tels que décrits.

Un mode de réalisation prévoit une mémoire contenant un ensemble de résultats représentatifs de l'application d'une fonction et/ou d'un procédé tels que décrits à un ensemble de nombres.

Un mode de réalisation prévoit un circuit électronique configuré pour exécuter une opération cryptographique mettant en oeuvre une fonction et/ou un procédé tels que décrits.

Un mode de réalisation prévoit un circuit électronique configuré pour recevoir un nombre, et fournir un résultat représentatif de l'application d'une fonction et/ou d'un procédé tels que décrits.

Un mode de réalisation prévoit un circuit et/ou une mémoire et/ou un produit-programme d'ordinateur, pour composant remplaçable d'imprimante.

Un mode de réalisation prévoit un circuit et/ou mémoire et/ou un produit-programme d'ordinateur, pour imprimante.

Un mode de réalisation prévoit un procédé d'authentification d'un composant remplaçable d'imprimante par une imprimante, comportant au moins une étape de mise en oeuvre, par un composant d'imprimante, d'une fonction et/ou d'un procédé tels que décrits.

Un mode de réalisation prévoit un circuit comportant au moins une unité de traitement, ladite unité de traitement étant configurée pour mettre en oeuvre un procédé d'authentification tel que décrit.

Un mode de réalisation prévoit un composant remplaçable d'imprimante comportant un circuit et/ou une mémoire tels que décrits.

Selon un mode de réalisation, le composant constitue une cartouche d'encre.

### Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :
la figure 1 représente, de façon très schématique et sous forme de blocs, un mode de réalisation d'un circuit électronique du type auquel s'appliquent les modes de réalisation qui vont être décrits ;
la figure 2 représente, de façon très schématique et sous forme de blocs, un mode de réalisation d'une fonction cryptographique ;
la figure 3 représente, de façon très schématique et sous forme de blocs, un mode de réalisation d'un tour de la fonction de la figure 2 ;
la figure 4 représente, de façon schématique et sous forme de blocs, un exemple de fonction du type à laquelle peut s'appliquer la fonction décrite ;
la figure 5 représente, de façon très schématique et sous forme de blocs, un mode de réalisation d'un système d'impression du type auquel s'applique, à titre d'exemple, la fonction cryptographique décrite ; et
la figure 6 représente, de façon très schématique et sous forme de blocs, un exemple simplifié de mise en oeuvre d'un procédé d'authentification d'une cartouche par une imprimante.

### Description détaillée

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, la fonction cryptographique décrite peut être mise en oeuvre dans divers schémas cryptographiques qui n'ont pas été détaillés, cette fonction étant compatible avec ces schémas usuels. De plus, un exemple d'application finale mettant en oeuvre les modes de réalisation décrits à un mécanisme d'authentification de cartouches d'imprimante est décrit. Toutefois, la fonction cryptographique décrite s'applique à d'autres mécanismes d'authentification, qu'il s'agisse de composants remplaçables d'imprimantes ou autres. Les modes de réalisation décrits sont en effet compatibles avec les applications usuelles d'une fonction cryptographique.

Sauf précision contraire, lorsque l'on fait référence à deux éléments connectés entre eux, cela signifie directement connectés sans éléments intermédiaires autres que des conducteurs, et lorsque l'on fait référence à deux éléments reliés ou couplés entre eux, cela signifie que ces deux éléments peuvent être connectés ou être reliés ou couplés par l'intermédiaire d'un ou plusieurs autres éléments.

Dans la description qui suit, on fera référence à « 0 » et « 1 » pour désigner des états logiques respectivement bas et haut des signaux numériques. Sauf précision contraire, l'état 0 représente l'état inactif d'un signal de commande.

Sauf précision contraire, les expressions "environ", "approximativement", "sensiblement", et "de l'ordre de" signifient à 10 % près, de préférence à 5 % près.

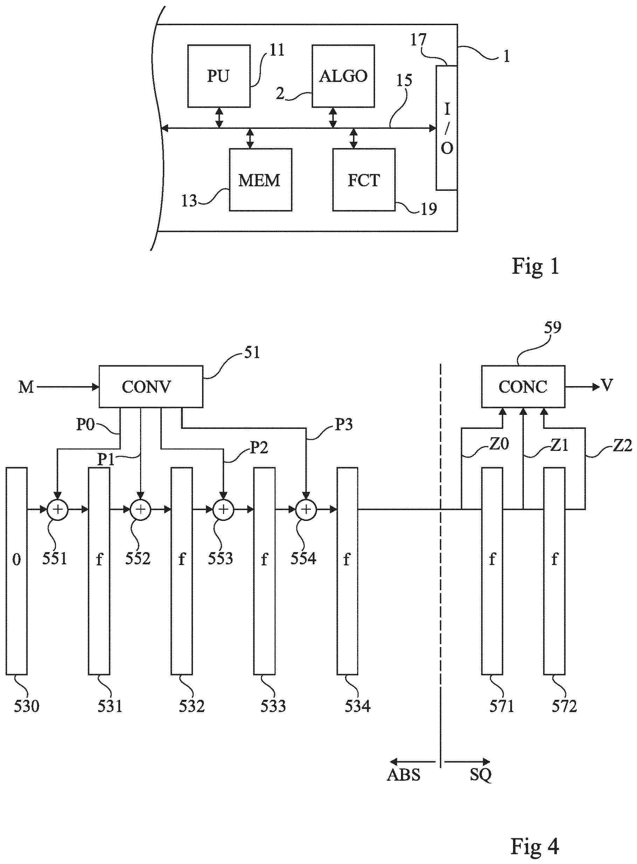

La figure 1 représente, de façon très schématique, un mode de réalisation d'un circuit électronique 1 du type auquel s'appliquent les modes de réalisation décrits.

Le circuit 1 comporte :
une entité de calcul 11 (PU), par exemple une machine d'états, un microprocesseur, un circuit logique programmable, etc. ;
une ou plusieurs zones 13 (MEM) de stockage volatile et/ou non volatile pour stocker tout ou partie des données et programmes ;
un ou plusieurs bus 15 de données, d'adresses et/ou de commandes entre les différents éléments internes au circuit 1 ;
une interface d'entrée-sortie 17 (I/O) de communication avec l'extérieur du circuit 1 ; et
divers autres circuits en fonction de l'application, symbolisés en figure 1 par un bloc 19 (FCT).

Selon le mode de réalisation représenté, le circuit 1 comporte en outre un circuit ou une fonction cryptographique 2 (ALGO) mettant en oeuvre un ou plusieurs algorithmes cryptographiques. L'élément 2 peut être un circuit matériel exécutant l'algorithme cryptographique de façon matérielle (logique câblée), une fonction logicielle exécutant un programme mis en oeuvre par un processeur (par exemple l'unité 11) ou une combinaison des deux. Dans l'exemple d'application aux cartouches d'imprimantes, une cartouche et une imprimante sont équipées de circuits du type de celui de la figure 1.

Afin de rendre plus complexe la tâche des fraudeurs, on a déjà proposé de manipuler, dans un algorithme cryptographique, des nombres non binaires, représentés dans une base différente de la base 2. Par exemple, les documents EP-A-2 523 485 et US-B-9,485,087 décrivent certains principes d'une utilisation de nombres représentés dans une base supérieure à 2.

Selon les modes de réalisation décrits, on prévoit d'utiliser une représentation en base 7. Une telle représentation en base 7, ou modulo 7, confère à la fonction cryptographique une robustesse et une rapidité significatives qui ressortiront des modes de réalisation décrits.

Par ailleurs, on prévoit de mettre en oeuvre cette représentation en base 7 dans une fonction exécutable par tour, c'est-à-dire compatible avec une succession d'exécutions des mêmes opérations élémentaires, en utilisant, comme opérande d'entrée (état), le résultat (état de sortie) du tour précédent.

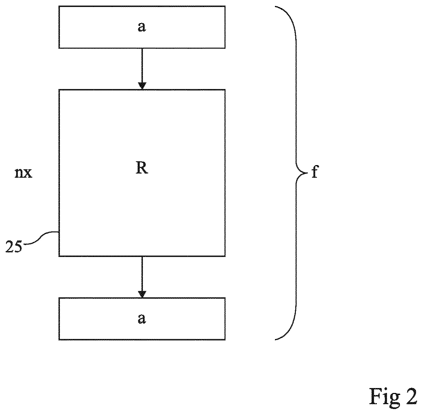

La figure 2 représente, de façon très schématique et sous forme de blocs, un mode de réalisation d'une fonction réalisant une permutation cryptographique f.

La fonction f reçoit en entrée un bloc ou état a représenté en base 7 qui est soumis (étape 25, R) à un traitement par tour de la fonction f. Le nombre n de tours est choisi en fonction de la résistance souhaitée pour l'algorithme. La fonction f fournit comme résultat un bloc a de même taille que le bloc d'entrée.

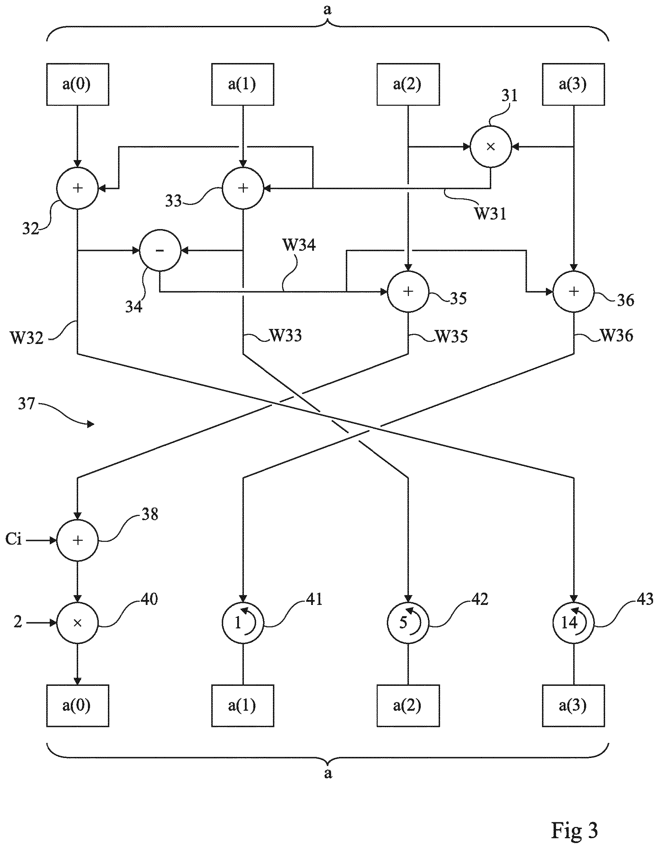

La figure 3 représente, de façon très schématique et sous forme de blocs, un mode de réalisation d'un tour R de la fonction cryptographique f de la figure 2.

La fonction de tour illustrée par la figure 3 traite un bloc a de cent-vingt-huit (128) codes ou chiffres (digits) en base 7, c'est-à-dire que chaque code est un élément du corps fini d'ordre 7 (GF(7) = {0, 1, 2, 3, 4, 5, 6}). Chacun des cent-vingt-huit codes peut être représenté en binaire par un triplet de trois bits. En effet, dans les technologies manipulant des bits, il faut, au sein de la fonction f, représenter les codes en base 7 sous forme binaire.

Selon le mode de réalisation décrit en figure 3, un état "a" traité par la fonction de tour comporte quatre mots a(0), a(1), a(2), a(3) de trente-deux (32) codes en base 7 chacun.

Par convention arbitraire, on désigne par la suite par x l'index du mot. Ainsi, un état a comporte quatre mots a(x), avec x compris entre 0 et 3. On désigne par z l'index du code d'un mot. Ainsi, chaque mot a(x) comporte 32 codes a(x, z), avec z compris entre 0 et 31. Enfin, chaque code peut être représenté par un triplet de bits (a(x, z, 0), a(x, z, 1), a(x, z, 2)), avec a(x, z) = a(x, z, 0) + 2.a(x, z, 1) + 4.a(x, z, 2).

On voit déjà que le triplet (a(x, z, 0), a(x, z, 1), a(x, z, 2)) = (1, 1, 1) ne doit jamais se présenter lors de l'exécution de la fonction f. On peut donc tirer profit de cette caractéristique pour détecter, de façon extrêmement simple, un dysfonctionnement qu'il soit volontaire (attaque) ou non. En effet, une simple combinaison logique (par exemple réalisant une fonction de type ET à trois entrées) des triplets manipulés par le circuit cryptographique fournit immédiatement, sur un bit, un signal de détection d'erreur.

La figure 3 illustre un tour, noté de rang i, de la permutation f. Comme indiqué précédemment, le nombre n de tours est fixé en fonction de la résistance souhaitée pour l'algorithme. A titre d'exemple particulier de réalisation, le nombre de tours est de 24 ou 48. On note cependant que le nombre de tours peut être quelconque, de préférence choisi entre la robustesse souhaitée pour l'algorithme et la durée d'exécution.

La permutation de tour peut être illustrée sous la forme de quatre lignes 0, 1, 2, et 3 mettant en oeuvre, à chaque étape du tour, une opération élémentaire sur les trente-deux codes a(x, z) de l'état a(x) (les mots a(0), a(1), a(2) et a (3)). Par la suite, on fait référence aux opérations modulo 7 des états a(x) et codes a(x, z). Les opérations (addition, multiplication, soustraction) sont effectuées, code par code, modulo 7.

On commence par multiplier (opération 31, x) successivement les trente-deux codes a(2, z) du mot a(2) par les trente-deux codes a(3, z) du mot a(3), soit une multiplication modulo 7 des mots a(2) et a(3). En d'autres termes, la multiplication s'effectue code par code.

Le résultat de la multiplication 31 est ensuite ajouté (opérations 32 et 33), modulo 7, aux codes des mots a(0) et a(1). Cela revient à ajouter, code par code, successivement les trente-deux codes a(0, z) du mot a(0) aux trente-deux codes du résultat W31 de la multiplication 31, et successivement les trente-deux codes a(1, z) du mot a(1) aux trente-deux codes du résultat W31.

Puis, le résultat W33 de l'addition 33 est soustrait (opération 34), modulo 7 et code par code, au résultat W32 de l'addition 32.

Puis, le résultat W34 de la soustraction 34 est ajouté (opérations 35 et 36), modulo 7 aux mots a2 et a3. En d'autres termes, les trente-deux codes dans le corps GF7 du mot W34 sont successivement ajoutés, code par code, aux trente-deux codes a(2, z) du mot a(2), et successivement aux trente-deux codes a(3, z) du mot a(3).

Puis (étape 37), on effectue une transposition des mots W32, W33, W35 et W36 résultant des opérations 32, 33, 35 et 36. Ainsi :
le mot W32 (a(0)) devient le mot a(3) de la ligne 3 ;
le mot W33 (a(1)) devient le mot a(2) de la ligne 2 ;
le mot W35 (a(2)) devient le mot a(0) de la ligne 0 ; et
le mot W36 (a(3)) devient le mot a(1) de la ligne 1.

Une étape suivante consiste à ajouter code par code (opération 38), modulo 7, une constante de tour Ci, sous la forme d'un mot de trente-deux codes en base 7, au mot W35 (a(0)). La constante de tour Ci est différente à chaque tour.

Une dernière étape du tour consiste à :
multiplier (opération 40), modulo 7, le résultat de l'addition 38 par deux, ce qui revient à multiplier, code par code, chacun des trente-deux codes par deux ;
effectuer un décalage circulaire (opération 41), modulo 32, d'une position des codes a(1, z) du mot a1 (W36), chaque code a(1, z) devenant le code a(1, z-1) à l'exception du code a(1, 0) qui devient le code a(1, 31) ;
effectuer un décalage circulaire (opération 42), modulo 32, de cinq positions des codes a(2, z) du mot a2 (W33), chaque code a(2, z) devenant le code a(2, z-5) à l'exception des codes a (2, 4), a (2, 3), a (2, 2), a (2, 1) et a (2, 0) qui deviennent respectivement a(2, 31), a(2, 30), a(2, 29), a(2, 28) et a(2, 27) ; et
effectuer un décalage circulaire (opération 43), modulo 32, de quatorze positions des codes a(3, z) du mot a3 (W32), chaque code a(3, z) devenant le code a(3 , z-14) à l'exception des codes a(3, 13), a(3, 12), a(3, 11), a(3, 10), a(3, 9), a(3, 8), a(3, 7), a(3, 6), a(3, 5), a(3, 4), a(3, 3), a(3, 2), a(3, 1) et a(3, 0) qui deviennent respectivement a(3, 31), a(3, 30), a(3, 29), a(3, 28), a(3, 27), a(3, 26), a(3, 25), a(3, 24), a(3, 23), a(3, 22), a(3, 21), a(3, 20), a(3, 19) et a(3, 18).

Les résultats des opérations 40, 41, 42 et 43 constituent respectivement les valeurs a(0), a(1), a(2) et a(3) de sortie du tour courant de rang i. Ces états deviennent typiquement les états d'entrée du tour suivant ou le résultat de la fonction f.

La figure 4 représente, de façon schématique et sous forme de blocs, un exemple d'algorithme du type auquel peut s'appliquer la fonction cryptographique f décrite.

L'exemple de la figure 4 correspond à un algorithme connu sous la dénomination « éponge » (sponge) qui met en oeuvre une phase ABS d'absorption (absorbing) et une phase SQ d'expansion (squeezing), dans laquelle on génère une chaîne (string) d'une longueur arbitraire souhaitée à partir de l'état de sortie de la phase d'absorption. Ce type de schéma algorithmique est décrit par exemple dans https://keccak.team/sponge_duplex.html, dont le contenu est incorporé par référence dans les limites permises par la loi applicable. Un message M est converti, par un bloc 51 (CONV), en quatre mots P0, P1, P2 et P3 d'un nombre donné de codes, chaque code étant en base 7.

La phase d'absorption ABS comporte un nombre quelconque de cycles, par exemple quatre cycles 531, 532, 533 et 534, d'application de la permutation f aux résultats d'une addition (opérations 551, 552, 553 et 554), par codes modulo 7, d'un des mots P0 à P3, respectivement à une valeur initiale 530 pour l'opération 551 ou au résultat du cycle précédent 531, 532 ou 533 pour les opérations 552, 553 et 554. La valeur initiale 530 est, par exemple, zéro (0) mais peut être n'importe quelle valeur pourvu qu'elle soit fixe. Dans une application utilisant une clé, cette clé peut être contenue dans cette valeur initiale.

Ce résultat (sortie du cycle 534) est soumis à la phase d'expansion SQ qui comporte, par exemple, deux cycles successifs 571 et 572 d'application de la fonction f. Le premier cycle 571 reçoit le résultat du cycle 534. Le second cycle 572 reçoit le résultat du cycle 571. Les sorties respectives des cycles 534, 571 et 572 sont en outre extraites pour constituer des valeurs Z0, Z1 et Z2 qui sont concaténées (opération 59, CONC) pour fournir le résultat V. Le nombre de cycles 57 (ici deux 571 et 572) peut être supérieur à deux. Il dépend de la taille souhaitée pour le résultat V.

Chaque cycle 531, 532, 533, 534, 571 et 572 comprend l'application de la fonction f, c'est-à-dire les n tours de la figure 2 (ou n fois la permutation de tour de la figure 3).

La figure 4 n'est qu'un exemple d'algorithme auquel peut s'appliquer la fonction décrite en relation avec les figures 2 et 3. Cette fonction est en fait de fonctionnement autonome et peut être utilisée par toute permutation cryptographique, voire dans un chiffrement par bloc.

Les étapes 51 et 59 (figure 4) de conversion de binaire en base 7 et de base 7 en binaire peuvent prendre diverses formes. Par exemple, on pourra utiliser des tables de conversion. De telles tables sont particulièrement adaptées pour la conversion dans le sens binaire vers base 7. Dans le sens base 7 vers binaire, on peut en variante utiliser un accumulateur des résultats de chaque application de la fonction f. Des instructions d'un programme sont alors stockées en mémoire non volatile 13.

Un avantage des modes de réalisation décrits est que la fonction f peut être mise en oeuvre de façon matérielle ou logicielle.

Un autre avantage des modes de réalisation décrits est que la fonction f est indépendante du reste de la structure de l'algorithme cryptographique. Ainsi, elle n'est pas limitée à une structure d'algorithme particulière.

La fonction f est par exemple au moins partiellement réalisée sous la forme d'opérateur matériel (opérateur logique) commandé par des instructions de programme stockées dans la mémoire 13 du circuit mettant en oeuvre un algorithme utilisant cette fonction. En variante, la fonction est mise en oeuvre de façon logicielle par un processeur, par exemple, l'unité de traitement 11.

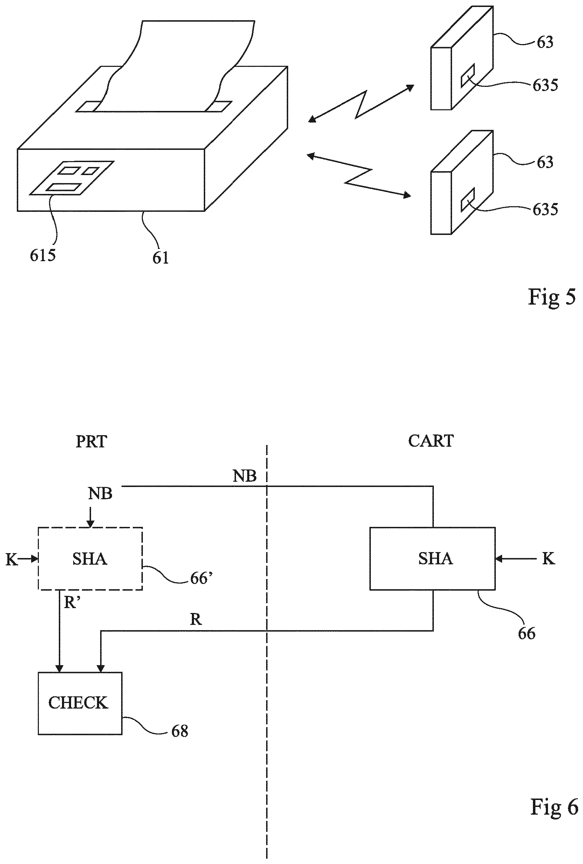

La figure 5 représente, de façon très schématique et sous forme de blocs, un mode de réalisation d'un système d'impression du type auquel s'applique, à titre d'exemple, la permutation cryptographique décrite.

Selon cet exemple, le système comporte une imprimante 61 et une ou plusieurs cartouches d'encre 63. Plus généralement, le système peut comporter une imprimante et tout élément ou composant remplaçable ou consommable associé à l'imprimante, par exemple des pièces de rechange du type têtes d'impression.

L'imprimante 61 et chaque cartouche 63 comportent un ou plusieurs circuits électroniques 615, respectivement 635. Les circuits 615 et 635 sont du type du circuit 1 décrit en relation avec la figure 1. En particulier, les circuits 615 et 635 comportent au moins : une mémoire (13, figure 1) ; une unité de traitement (11, figure 1), par exemple un processeur ou une machine d'états en logique câblée ; une interface d'entrée-sortie (17, figure 1) pour communiquer, entre autres, avec l'autre partie (cartouche ou imprimante) du système ; et une fonction cryptographique du type de la fonction 2 décrite ci-dessus.

Une ou plusieurs clés sont stockées dans la mémoire (non volatile) 13 du circuit 615 et du circuit 635. Ces clés sont utilisées dans un processus d'authentification d'une cartouche par une imprimante.

La figure 6 représente, de façon très schématique et sous forme de blocs, un exemple simplifié de mise en oeuvre d'un procédé d'authentification d'une cartouche par une imprimante.

Selon ce mode de réalisation simplifié, à chaque mise sous tension et/ou périodiquement et/ou à chaque mise en place d'une nouvelle cartouche, l'imprimante PRT déclenche un processus d'authentification.

De multiples processus d'authentification mettant en oeuvre des mécanismes de calcul de signatures ou de hachage, tels que par exemple SHA sont connus. Tout algorithme, susceptible d'utiliser la fonction cryptographique f décrite, peut être utilisé. L'algorithme SHA, et plus particulièrement SHA-3, constitue un algorithme utilisant une fonction éponge du type de celle illustrée par la figure 4.

Dans l'exemple de la figure 6, on suppose, de façon simplifiée, que le circuit de l'imprimante sélectionne un nombre NB, par exemple de façon aléatoire. Ce nombre NB constitue par exemple le message M à soumettre à la fonction éponge (figure 4). Le nombre NB est transmis par l'imprimante au circuit de la cartouche CART afin que celle-ci le soumette à l'algorithme de signature 66 utilisant la fonction éponge basée sur la fonction cryptographique f. Le résultat R ou une information fonction de ce résultat est retourné par la cartouche CART à l'imprimante PRT.

On suppose que la cartouche calcule la signature en utilisant une clé K, qui est utilisée en tout ou partie dans la valeur initiale (530, figure 4) de la fonction éponge.

Dans l'exemple de la figure 6, on suppose également que l'imprimante (le circuit électronique qu'elle comporte) dispose du même algorithme de signature que la cartouche et qu'elle calcule également (bloc 66') un résultat R' de signature du nombre NB. L'imprimante et la cartouche partagent dans cet exemple la même clé, mais des mécanismes plus complexes impliquant des dérivations de clés (par exemple des clés de sessions) ou des transmissions de clés pourront être utilisés, sans que cela n'affecte le principe de l'utilisation de la fonction cryptographique f. L'imprimante est alors en mesure de vérifier (bloc 68, CHECK) que la signature calculée par la cartouche à partir du nombre NB est identique à la signature qu'elle a elle-même calculée. Si la cartouche est authentique, l'imprimante autorise son utilisation dans les impressions opérées par l'imprimante. Dans le cas contraire, diverses formes de contremesure, en elles-mêmes usuelles, peuvent être prévues, par exemple une extinction de l'imprimante, l'émission d'un message d'erreur, un blocage total ou partiel de fonctions de l'imprimante, etc.

Les échanges entre les circuits 615 et 635 de l'imprimante et de la cartouche sont de préférence chiffrés.

Divers modes de réalisation ont été décrits. Diverses modifications apparaîtront à l'homme de l'art. En particulier, le choix du nombre de tours peut varier d'une application à une autre.

Par ailleurs, la fonction et/ou le procédé décrits peuvent être mis en oeuvre sous la forme d'une table ou ensemble de résultats représentatifs de leur application à un ensemble de nombres. Ces résultats sont alors stockés dans une mémoire, de préférence une mémoire non volatile, et sont extraits en fonction d'un nombre communiqué, par la cartouche ou par l'imprimante. De façon similaire, tout circuit fournissant un résultat représentatif d'une application de la fonction et/ou du procédé décrits à un nombre pourra être utilisé. Un tel circuit peut être associé à une mémoire et/ou être configuré pour exécuter un programme représentatif de la fonction et/ou du procédé décrits. En outre, tout ce qui a été décrit peut être mis en oeuvre de façon logicielle ou matérielle ou par une combinaison des deux.

Enfin, la mise en oeuvre pratique des modes de réalisation qui ont été décrits est à la portée de l'homme du métier en utilisant les indications fonctionnelles données ci-dessus. Par ailleurs, bien que l'on ait donné l'exemple particulier d'un calcul de signature pour authentifier une cartouche d'imprimante, la fonction cryptographique décrite peut être plus généralement utilisée dans tout mécanisme d'authentification d'un élément par un autre, pourvu que ces deux éléments soient équipés des circuits et/ou mémoires adaptés, et plus généralement dans tout mécanisme cryptographique.

## Revendications

1. Procédé d'exécution d'une fonction de permutation cryptographique par un circuit électronique, ladite fonction de permutation cryptographique appliquée à un premier mot (a0), un deuxième mot (a1), un troisième mot (a2) et un quatrième mot (a3), chaque mot étant constitué de plusieurs des codes en base 7, le procédé comprenant :
une étape (31) de multiplication, code par code, du troisième mot (a2) par le quatrième mot (a3) ;
une étape (32, 33) d'addition, code par code, respectivement au premier mot (a0) et au deuxième mot (a1), du résultat de la multiplication (31) ;
une étape (34) de soustraction, code par code, du résultat de l'addition au deuxième mot au résultat de l'addition (32) au premier mot ;
une étape (35, 36) d'addition, code par code, du résultat de la soustraction (34) respectivement au troisième mot (a2) et au quatrième mot (a3) ;
une étape (38) de combinaison, code par code, à une constante de tour (Ci), du résultat de l'étape (36) d'addition du troisième mot au résultat de la soustraction ; et
une étape (40) de multiplication par deux, code par code, du résultat de ladite combinaison et de décalage circulaire (41, 42, 43) des codes des résultats respectifs de l'étape d'addition (36) du quatrième mot au résultat de la soustraction, de l'étape d'addition (33) du deuxième mot au résultat de la multiplication, et de l'étape d'addition (32) du premier mot au résultat de la multiplication.

2. Procédé selon la revendication 1, dans laquelle chaque mot (a0, a1, a2, a3) comporte trente-deux codes.

3. Procédé selon la revendication 1 ou 2, dans laquelle les décalages circulaires (41, 42, 43) sont respectivement d'une, de cinq et de quatorze positions.

4. Procédé selon l'une quelconque des revendications 1 à 3, dans laquelle chaque code en base 7 est représenté sous la forme d'un triplet d'états binaires.

5. Procédé selon l'une quelconque des revendications 1 à 4, dans laquelle les étapes sont exécutées plusieurs fois, l'état final d'une itération constituant l'état initial d'une itération suivante.

6. Procédé de hachage mettant en oeuvre le procédé selon l'une quelconque des revendications 1 à 5.

7. Procédé selon la revendication 6, dans lequel un message est converti en base 7 pour être appliqué à ladite fonction de permutation cryptographique.

8. Procédé selon la revendication 6 ou 7, dans lequel la fonction de permutation cryptographique est appliquée plusieurs fois.

9. Procédé de protection d'une information manipulée par un circuit électronique, mettant en oeuvre le procédé selon l'une quelconque des revendications 6 à 8.

10. Procédé selon la revendication 9 dans son rattachement à la revendication 4, dans lequel l'apparition d'un triplet déterminé identifie une erreur.

11. Produit-programme d'ordinateur comportant des instructions qui, lorsqu'elles sont exécutées par un processeur, font que le processeur met en oeuvre un procédé selon l'une quelconque des revendications 1 à 10.

12. Mémoire (13) stockant des instructions qui, lorsqu'elles sont mises en oeuvre par un processeur, font que le processeur met en oeuvre un procédé selon l'une quelconque des revendications 1 à 10.

13. Circuit électronique, configuré pour exécuter une opération cryptographique mettant en oeuvre un procédé selon l'une quelconque des revendications 1 à 10.

14. Circuit électronique selon la revendication 13, configuré pour recevoir un nombre (NB) et fournir un résultat (R) représentatif de la mise en oeuvre du procédé

15. Circuit selon la revendication 13 ou 14 et/ou mémoire selon la revendication 12 et/ou produit-programme d'ordinateur selon la revendication 11, pour composant remplaçable d'imprimante.

16. Procédé d'authentification d'un composant remplaçable d'imprimante par une imprimante, comportant au moins une étape de mise en oeuvre, par le composant d'imprimante, d'un procédé selon l'une quelconque des revendications 1 à 10.

17. Circuit selon l'une quelconque des revendications 13 à 15, comportant au moins une unité de traitement (11), ladite unité de traitement étant configurée pour mettre en oeuvre un procédé d'authentification selon la revendication 16 .

18. Composant remplaçable d'imprimante (63) comportant un circuit selon l'une quelconque des revendications 13 à 15 ou 17 et/ou une mémoire selon la revendication 12 .

19. Composant selon la revendication 18, constituant une cartouche d'encre.

## Patentansprüche

1. Verfahren zum Ausführen einer kryptografischen Permutationsfunktion durch eine elektronische Schaltung, wobei die kryptografische Permutationsfunktion auf ein erstes Wort (a0), ein zweites Wort (a1), ein drittes Wort (a2) und ein viertes Wort (a3) angewandt wird, wobei jedes Wort aus mehreren Codes der Basis 7 besteht, wobei das Verfahren Folgendes aufweist:
einen Schritt (31) der codeweisen Multiplikation des dritten Wortes (a2) mit dem vierten Wort (a3);
einen Schritt (32, 33) des codeweisen Addierens des Ergebnisses der Multiplikation (31) zu dem ersten Wort (a0) bzw. zu dem zweiten Wort (a1);
einen Schritt (34) des codeweisen Subtrahierens des Ergebnisses der Addition zu dem zweiten Wort von dem Ergebnis der Addition (32) zu dem ersten Wort;
einen Schritt (35, 36) des codeweisen Addierens des Ergebnisses der Subtraktion (34) zum dritten Wort (a2) bzw. zum vierten Wort (a3);
einen Schritt (38) des codeweisen Kombinierens des Ergebnisses des Schritts (36) des Addierens des dritten Worts zum Ergebnis der Subtraktion mit einer Rundungskonstante (Ci); und
einen Schritt (40) des codeweisen Multiplizierens mit zwei, und zwar des Ergebnisses der Kombination und des zirkulären Verschiebens (41, 42, 43) der Codes der jeweiligen Ergebnisse des Schritts des Addierens (36) des vierten Worts zu dem Ergebnis der Subtraktion, des Schritts des Addierens (33) des zweiten Worts zu dem Ergebnis der Multiplikation und des Schritts des Addierens (32) des ersten Worts zu dem Ergebnis der Multiplikation.

2. Verfahren nach Anspruch 1, wobei jedes Wort (a0, a1, a2, a3) zweiunddreißig Codes aufweist.

3. Verfahren nach Anspruch 1 oder 2, wobei die zirkulären Verschiebungen (41, 42, 43) jeweils um eine, fünf und vierzehn Stellen erfolgen.

4. Verfahren nach einem der Ansprüche 1 bis 3, wobei jeder Code in der Basis 7 in Form eines Tripletts von Binärzuständen dargestellt wird.

5. Verfahren nach einem der Ansprüche 1 bis 4, wobei die Schritte mehrfach ausgeführt werden, wobei der Endzustand einer Iteration den Anfangszustand einer nächsten Iteration bildet.

6. Ein Hashing-Verfahren, das das Verfahren nach einem der Ansprüche 1 bis 5 implementiert.

7. Verfahren nach Anspruch 6, wobei eine Nachricht in die Basis 7 umgewandelt wird, um auf die kryptographische Permutationsfunktion angewendet zu werden.

8. Verfahren nach Anspruch 6 oder 7, wobei die kryptografische Permutationsfunktion (f) mehrmals angewendet wird.

9. Verfahren zum Schutz von Informationen, die von einer elektronischen Schaltung manipuliert werden, wobei das Verfahren nach einem der Ansprüche 6 bis 8 implementiert wird.

10. Verfahren nach Anspruch 9 und nach Anspruch 4, wobei das Auftreten eines bestimmten Tripletts einen Fehler identifiziert.

11. Computerprogrammprodukt mit Befehlen, die, wenn sie von einem Prozessor ausgeführt werden, den Prozessor veranlassen, ein Verfahren nach einem der Ansprüche 1 bis 10 zu implementieren.

12. Speicher (13), der Befehle speichert, die, wenn sie von einem Prozessor ausgeführt werden, den Prozessor veranlassen, ein Verfahren nach einem der Ansprüche 1 bis 10 zu implementieren.

13. Elektronische Schaltung, die konfiguriert ist zum Ausführen einer kryptographischen Operation, die ein Verfahren nach einem der Ansprüche 1 bis 10 implementiert.

14. Elektronische Schaltung nach Anspruch 13, die konfiguriert ist zum Empfangen einer Zahl (NB) und zum Bereitstellen eines Ergebnisses (R), das für die Implementierung des Verfahrens repräsentativ ist.

15. Elektronische Schaltung nach Anspruch 13 oder 14 und/oder Speicher nach Anspruch 12 und/oder Computerprogrammprodukt nach Anspruch 11, für eine austauschbare Druckerkomponente.

16. Verfahren zur Authentifizierung einer austauschbaren Druckerkomponente durch einen Drucker, wobei das Verfahren mindestens einen Schritt der Implementierung des Verfahrens nach einem der Ansprüche 1 bis 10 durch die Druckerkomponente aufweist.

17. Schaltung nach einem der Ansprüche 13 bis 15, wobei die Schaltung mindestens eine Verarbeitungseinheit (11) aufweist, wobei die Verarbeitungseinheit konfiguriert ist, um ein Authentifizierungsverfahren nach Anspruch 16 zu implementieren.

18. Auswechselbare Druckerkomponente (63), die eine Schaltung nach einem der Ansprüche 13 bis 15 oder 17, und/oder einen Speicher nach Anspruch 12 aufweist.

19. Komponente nach Anspruch 18, die eine Tintenkartusche ist.

## Claims

1. A method for executing a cryptographic permutation function by an electronic circuit, said cryptographic permutation function being applied to a first word (a0), a second word (a1), a third word (a2), and a fourth word (a3), each word being made of several codes in base 7, the method comprising:
a step (31) of multiplying, code by code, the third word (a2) by the fourth word (a3);
a step (32, 33) of adding, code by code, respectively to the first word (a0) and to the second word (a1), the result of the multiplication (31);
a step (34) of subtracting, code by code, the result of the addition to the second word from the result of the addition (32) to the first word;
a step (35, 36) of adding, code by code, the result of the subtraction (34) respectively to the third word (a2) and to the fourth word (a3);
a step (38) of combining, code by code, with a round constant (Ci), the result of the step (36) of adding the third word to the result of the subtraction; and
a step (40) of multiplying by two, code by code, the result of said combination and of circularly shifting (41, 42, 43) the codes of the respective results of the step of adding (36) the fourth word to the result of the subtraction, of the step of adding (33) the second word to the result of the multiplication, and of the step of adding (32) the first word to the result of the multiplication.

2. The method of claim 1, wherein each word (a0, a1, a2, a3) comprises thirty-two codes.

3. The method of claim 1 or 2, wherein the circular shifts (41, 42, 43) are respectively by one, five, and fourteen positions.

4. The method of any of claims 1 to 3, wherein each code in base 7 is represented in the form of a triplet of binary states.

5. The method of any of claims 1 to 4, wherein the steps are executed a plurality of times, the final state of an iteration forming the initial state of a next iteration.

6. A hashing method implementing the method of any of claims 1 to 5.

7. The method of claim 6, wherein a message is converted to base 7 to be applied to said cryptographic permutation function.

8. The method of claim 6 or 7, wherein the cryptographic permutation function (f) is applied a plurality of times.

9. A method of protecting information manipulated by an electronic circuit, implementing the method of any of claims 6 to 8.

10. The method of claim 9 and of claim 4, wherein the occurrence of a determined triplet identifies an error.

11. A computer program-product comprising instructions which, when executed by a processor, cause the processor to implement a method according to any of claims 1 to 10.

12. A memory (13) storing instructions which, when executed by a processor, cause the processor to implement a method according to any of claims 1 to 10.

13. An electronic circuit configured for executing a cryptographic operation implementing a method according to any of claims 1 to 10.

14. The electronic circuit of claims 13, configured for receiving a number (NB) and for providing a result (R) which is representative of the implementation of the method.

15. The electronic circuit of claim 13 or 14 and/or the memory of claim 12 and/or the computer program-product of claim 11, for printer replaceable component.

16. An authenticating method, by a printer, of a printer replaceable component; comprising at least a step of implementing the method of any of claims 1 to 10 by the printer component.

17. The circuit of any of claims 13 to 15, comprising at least a processing unit (11), said processing unit being configured to implement an authentication method according to claim 16.

18. Printer replaceable component (63) comprising a circuit according to any of claims 13 to 15 or 17, and/or a memory according to claim 12.

19. The component of claim 18, being an ink cartridge.
